# EUROPEAN PATENT APPLICATION

(11) **EP 1 835 496 A2**
(43) Date of publication of application: **19.09.2007**
(21) Application number: 07300771.8
(22) Date of filing: 05.02.2007
(51) Int. Cl.: G11B 7/09, G11B 7/22

(54) **Apparatus for accessing moving storage media and method of manufacturing the apparatus**

(30) Priority: 13.03.2006 EP 06005069
(71) Applicant: Thomson Licensing, 92100 Boulogne-Billancourt (FR)
(72) Inventor: Bammert, Michael, 78739 Hardt (DE); Suzuki, Tsuneo, 78087 Mönchweiler (DE); Dupper, Rolf, 78050 Villingen-Schwenningen (DE); Tabor, Günter, 78056 Villingen-Schwenningen (DE)
(74) Representative: Thies, Stephan

(57) **Abstract**

The invention refers to a pickup (100) for moving storage media having a movable part (104) movable in a 2D plane of motion (X, Y) where smaller airgaps between magnets (307, 305) and coils on a flat carrier (105) are achieved by the movable part (104) having a holder opening (300) equipped to hold a part (402, 403) of the coil carrier (105) in a range of positions (301) which extend along an alignment direction (301) which lies outside the plane of motion (X, Y), and in that the part (402, 403) of the coil carrier (105) is fixed within the holder opening (300) in one position (302) within the range (301); and to a manufacturing method thereof.

## Description

### Field of the invention

The present invention relates to an apparatus also known as pickup for accessing moving storage media, in particular to a mechanical layout thereof, and to a method for manufacturing the apparatus.

### Background of the invention

In devices to access moving storage media having information tracks on layers, a pickup is employed to access locations of the storage medium. For following the information tracks, the medium and the pickup are being moved relative to each other. In the pickup, a transducer is brought into an access position relative to a target spot on the information tracks.

Here, access summarizes a reading access when the transducer reads information stored in the information tracks and converts it to an electric signal to be further processed, a writing or recording access when the transducer is provided with an electric signal and writes or records information of the signal onto the information tracks, or combinations of reading and writing access.

The medium mounted in the device and being moved relative to the pickup may have position errors in that the target spot varies relative to and around its nominal position. Most prominent among the position errors is an error occurring in a direction within the layer and at least substantially diagonal or perpendicular to the information tracks, generally called tracking error, the direction correspondingly being called tracking direction; and an error in a direction at least substantially perpendicular to the layer, here called distance error, the direction correspondingly being called distance direction. Other, less prominent errors occur in the form that the orientation of the medium relative to the pickup deviates from a nominal orientation, which form is often called tilt error. A direction which is orthogonal both to the tracking direction as well as to the distance direction will be called information direction in the following, because it is the direction of the tangent to the information track in the target spot.

To keep the transducer correctly positioned relative to the target spot, pickups typically have a so-called actuator. The actuator, typically, has a movable part which is positioned by magnets interacting with coils onto which electrical currents are imposed. A so-called tracking servo loop controls the position of the movable part in the tracking direction, a distance servo loop controls the position of the movable part in the distance direction, and for some pickups one or more so-called tilt servo loops control the angle of the movable part.

The tracking direction and the distance direction together span a plane of motion, in which the most prominent or wide-ranging motions take place. If a pickup employs tilt control, a so-called radial tilt motion also takes place in this plane of motion. The movable part of the actuator is typically suspended by suspension means like wires oriented in parallel and in the information direction, i.e. at right angle to the plane of motion. The bending elasticity of the wires transversal to their length allows the movable part to move in the plane of motion, whereas the longitudinal stiffness of the wires strongly fixes the movable part in the information direction, i.e in the direction orthogonal to the plane of motion.

As shown in US 2003/0058550 A1 and widely used, the actuator carries on its movable part one or more coils realized as printed coils on a printed circuit board which, on at least one of its sides, faces a magnet across an airgap of substantially constant width. In this, the coils, the airgap, as well as the magnet surfaces typically are oriented parallel to the plane of motion, to make sure that the three retain their distance relations as far as possible over the entire range of deviations around the neutral position. In order to generate strong actuator forces, i.e. to maximize actuator sensitivity, the airgap has to be as small as possible, the limitation being that the movable part and the rest of the pickup must not touch each other under normal operation conditions.

US 2004/0187144 A discloses an optical pickup actuator having, amongst others, a movable blade holding an objective lens, where a pattern coil is installed in the blade. The pattern coil comprises coils positioned inside a cavity of the blade, and end parts to which a plurality of wires is soldered.

### Invention

The actuator as described above can be seen to have the drawbacks that because of mechanical tolerances of the parts and tools involved, considerable variations in airgap width do exist. Hence, in order to guarantee normal operation conditions with reasonable product reject rates, airgap width has to be designed to rather large nominal values, and individual actual airgap widths vary between nearly zero and nearly double the nominal width.

The invention aims to improve the described pickup with respect to at least some of these shortcomings.

A pickup according to the invention which accesses moving storage media carrying information tracks has a base carrying one or more magnet configurations with a planar magnet surface and has a movable part carrying a planar coil carrier with coils facing the magnet configurations. The movable part of the pickup is movable in a plane of motion spanned by a distance direction and a tracking direction. According to the invention, then, the movable part has a holder opening equipped to hold a part of the coil carrier in a range of positions which extend along an alignment direction which lies outside the plane of motion, and the part of the coil carrier is fixed within the holder opening in one position within the range. This has the advantage that it makes possible to modify, during assembly, the airgap between the magnet surface and the planar coil carrier to any desired width by shifting the coil carrier within the range of positions made possible by the holder opening, and by subsequently fixing the coil carrier position by fixing its parts within the holder opening.

Preferably, in a pickup according to the invention, the alignment direction is chosen substantially orthogonal to the plane of motion (X, Y). This has the advantage that any shift of the coil carrier within the allowed range of positions effects the maximum possible increase or decrease of air gap width, and does not cause or is not accompanied by any unwanted shift of the coil carrier in the tracking or distance direction. However, scenarios may exist, where alignment along a direction orthogonal to the plane of motion is not possible or not desired. Potential reasons for this are to avoid contacts of the coil carrier with other surrounding parts close by, or to secure a specific distribution of mass within the pickup, or to achieve better accessibility, or to achieve a leverage effect for better vernier alignment. In any case, provided that the alignment direction lies outside the plane of motion, i.e. has a non-vanishing component orthogonal or normal to the plane of motion, any shift of the coil carrier along the alignment direction will cause at least some corresponding change in air gap width.

Preferably, in the pickup according to the invention, at least one of the magnet configurations comprises a yoke firmly connected to the base and a magnet group of selectable thickness. This has the advantage of providing another, complementary way of aligning or adjusting air gap width. The main application is the scenario when a first air gap width on one side of the planar coil carrier has been adjusted by shifting and fixing the coil carrier along the alignment direction as described above. In this case aligning the second air gap width on the other side of the coil carrier is made possible by selecting and using a magnet group of suitable thickness. One way of realizing the magnet group of selectable thickness is to use a magnetically conductive spacer sheet mounted to the yoke and a constant thickness magnet mounted to the spacer sheet. In that case selecting the magnet group of suitable thickness amounts to selecting and using a spacer sheet of suitable thickness from amongst a set of sheets of different thicknesses and fixing it between the yoke and the magnet.

It is also conceivable to have spacer sheets between yoke and magnet in both magnet configurations, i.e. on both sides of the coil carrier. The advantage in this case is that it allows to use a smaller holder opening, resulting in a smaller range of positions, which may be desirable for reasons of mechanical stability and/or low weight of the movable part. It may even be reasonable and is considered within the scope of this invention to use the selectable thickness spacer sheets or magnet groups alone, i.e. without any range of possible positions for the coil carrier in the movable part.

A pickup according to the invention is suited to be used in a device for accessing moving storage media.

According to the invention, a pickup as described, having a first magnet configuration on one side of the coil carrier with a first yoke firmly connected to the base and a first magnet, and having a second magnet configuration on the other side of the coil carrier with a second yoke firmly connected to the base and a second magnet group, is manufactured by the method having the following steps:
- fixing the first magnet to the first yoke;
- moving the coil carrier into a selected position within the holder opening such that the coil carrier is at a predefined first distance to the surface of the first magnet;
- fixing the coil carrier at the selected position;
- selecting the second magnet group from a set of magnet groups of different thickness;
- fixing the selected second magnet group to the second yoke.

This has the advantage that the two separate adjustment steps of moving and selecting allow to largely neutralize individual parts dimensions tolerances and assembly tolerances, thus enabling for small air gap widths in production in a highly controlled way.

Advantageously, in the method of manufacturing, the second magnet group comprizes a spacer sheet and a second magnet, and selecting the magnet group is achieved by selecting a selected spacer sheet from a set of spacer sheets of different thickness, and fixing the second magnet to the selected spacer sheet. This has the advantage that only one size of magnets needs to be kept in stock.

Further advantages and exemplary embodiments of the invention are illustrated in the drawings and are explained in more detail in the following description. They refer to a scenario where the recording medium is an optical disk and the transducer is a configuration having a light source, a focussing lens and a photodetector. But beyond this scenario, the invention can be employed on any kind of optical recording medium having information tracks in layers, like those in card or tape form; and regardless whether the readout principle is of a reflective or of a transductive type. Moreover, it can as well be used on magnetical storage, or actually, on any access of moving storage, where a transducer has to be quickly servo controlled to follow an information track situated on a surface of a storage medium.

### Brief description of drawings

In the drawings, throughout which like parts are designated by like reference numerals,
- Fig. 1: shows a pickup according to the invention;
- Fig. 2: shows an enlarged view of the magnets and coil carrier section of the pickup of Fig. 1;
- Fig. 3: shows a further enlarged view of the fastening of one end of the coil carrier in the holder opening;
- Fig. 4: shows an exploded view of the parts of the pickup of Fig. 1.

### Detailed description of preferred embodiments

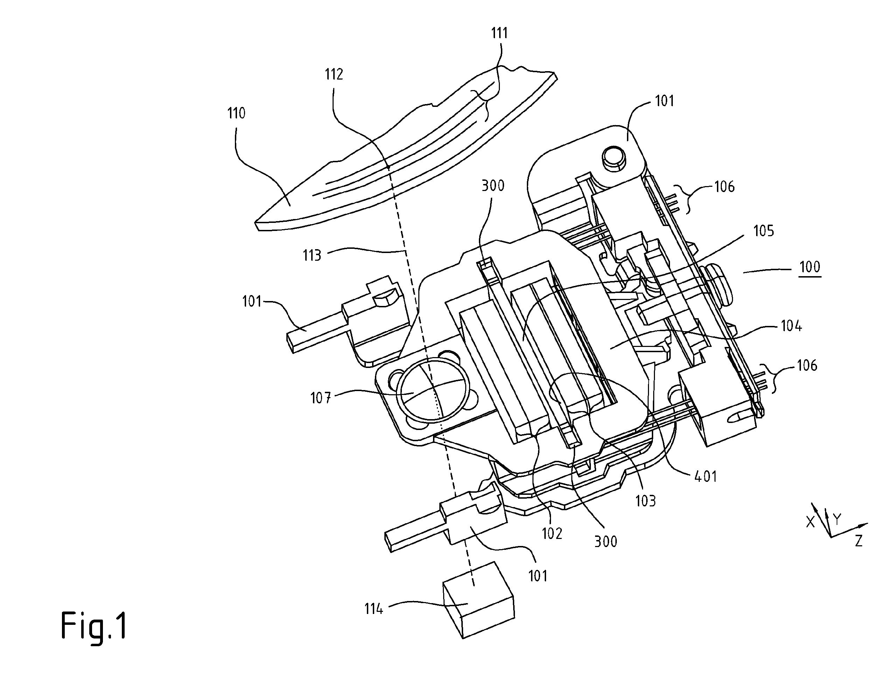

Fig. 1 shows a pickup 100 according to the invention in a scenario where the recording medium is an optical disk 110 carrying information in tracks 111, more specifically a disk of reflective type where the readout beam is a reflected beam reflected at the target spot 112. The transducer in this case is a configuration having a light source, a focussing lens 107 and a photodetector. The lens 107 and the readout beam are centered on or near the optical axis 113 of the pickup 100, light source and photodetector are just shown symbolically and summarily as an optical component 114. What has been called "distance" -error / -motion / -direction / -servo so far takes the form of "focus" -error / -motion / -direction / -servo, and it is the focussing lens 107 that is held on the movable part 104 of the actuator and is being servo controlled in quick motion against the target spot 112 on the rotating disk 110.

The pickup has a base 101 and a movable part 104 connected to the base 101 by suspension wires 106. The base 101 refers here to the ensemble of rigidly connected elements against which the movable part 104 moves. This does not preclude that typically the pickup as a whole, including base 101, suspension wires 106 and movable part 104, is itself movable and is being moved in a direction orthogonal to the information tracks 111 on the storage medium 110, allowing to access all storage locations on the medium 110. At the target spot 112, the information tracks 111 are oriented in an information direction Z.

The movable part 104 carries the lens 107 and a coil carrier 105. The coil carrier 105 carries coils not explicitly shown; and by interacting with magnet configurations 102, 103 of the base 101, the coil carrier 105 drives the movable part 104 in a focus direction Y and a tracking direction X. A suitable current feeding of the coils on the coil carrier 105 allows to achieve a tilt rotation around an axis parallel to the information direction Z, as well.

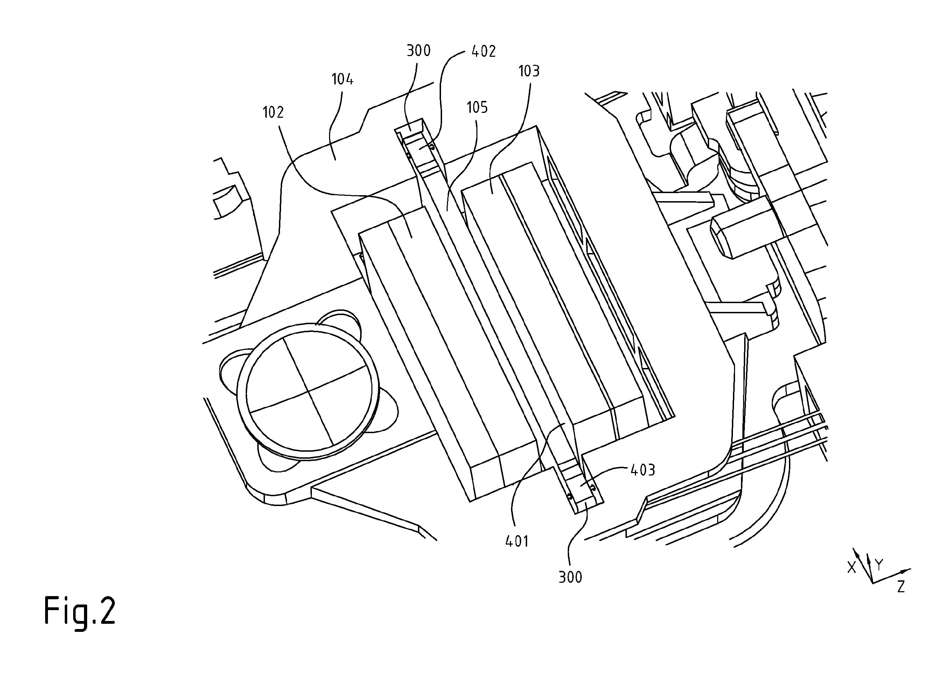

Fig. 2 shows an enlarged view of that section of the pickup of Fig. 1 which comprises the magnet configurations 102, 103, which are part of the base 101, and the coil carrier 105, itself part of the movable part 104. The movable part 104 has two holder openings 300 which accommodate or contain end parts 402, 403 of the coil carrier 105. The principle of mounting of the coil carrier 105 within the holder openings 300 being the same on both ends of the coil carrier 105, only one end will be shown in even more enlargement in the following. In the embodiment shown, the other end of the coil carrier 105, and its placement and mounting within the holder opening 300, are of corresponding, albeit mirror symmetrical construction.

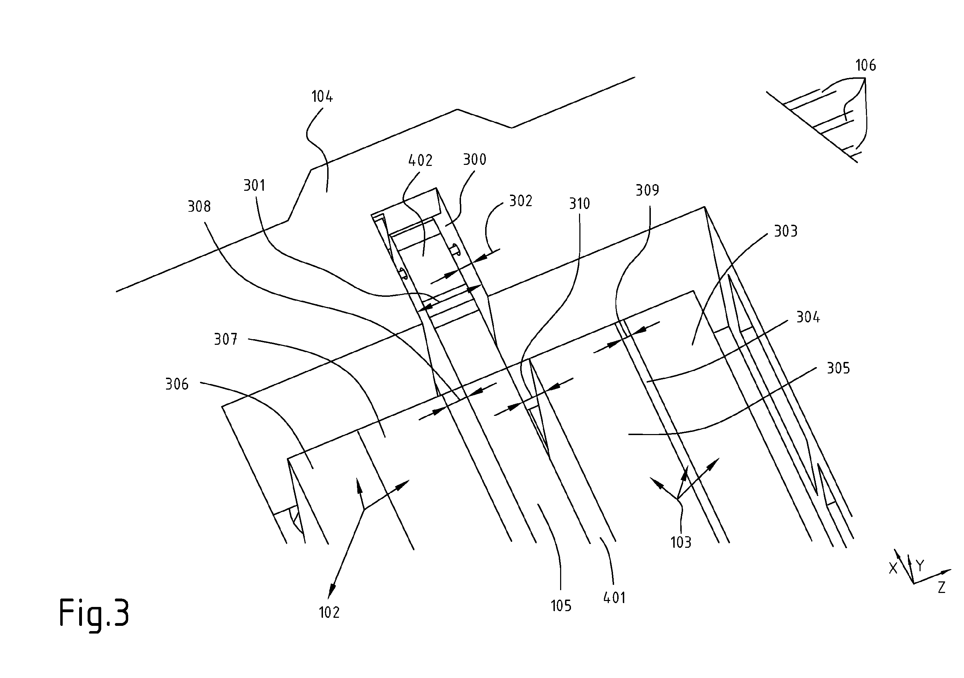

Fig. 3 shows a further enlarged view of the fastening or fixing of one end 402 of the coil carrier 105 in the holder opening 300 of the movable part 104. The width of the holder opening 300 is larger than the thickness of the coil carrier 105, so that the coil carrier 105 can be positioned in a range of positions 301 which extend along an alignment direction 301. With the shown arrangement of the suspension wires 106 elastically holding the movable part 104, the alignment direction 301 is orthogonal or normal to the plane of motion spanned by the focus direction Y and the tracking direction X. From among the range of positions 301 it can take, the coil carrier 105 and its end 402 are fixed within the holder opening 300 in a specific position 302 selected such that the airgap between the surface of the left magnet configuration 102 and the surface of the coil carrier 105 has a first required width 308. The left magnet configuration 102 consists of a first yoke 306 and a first magnet 307 fastened to the first yoke 306. To the right of the coil carrier 105, the right magnet configuration 103 consists of a second yoke 303, a spacer sheet 304 fastened to the second yoke 303, and a second magnet 305 fastened to the spacer sheet 304. The spacer sheet thickness 309 has been selected such that the airgap between the surface of the coil carrier 105 and the surface of the right magnet configuration 103 has a second required width 310. Among the methods apt for fixing the end 402 of the coil carrier 105 at the specific selected position 302 are gluing, clamping, immersing the area of contact in a fluid which subsequently is made to harden, or as a by-product of soldering the coil carrier to suspension wires which traverse the holder opening.

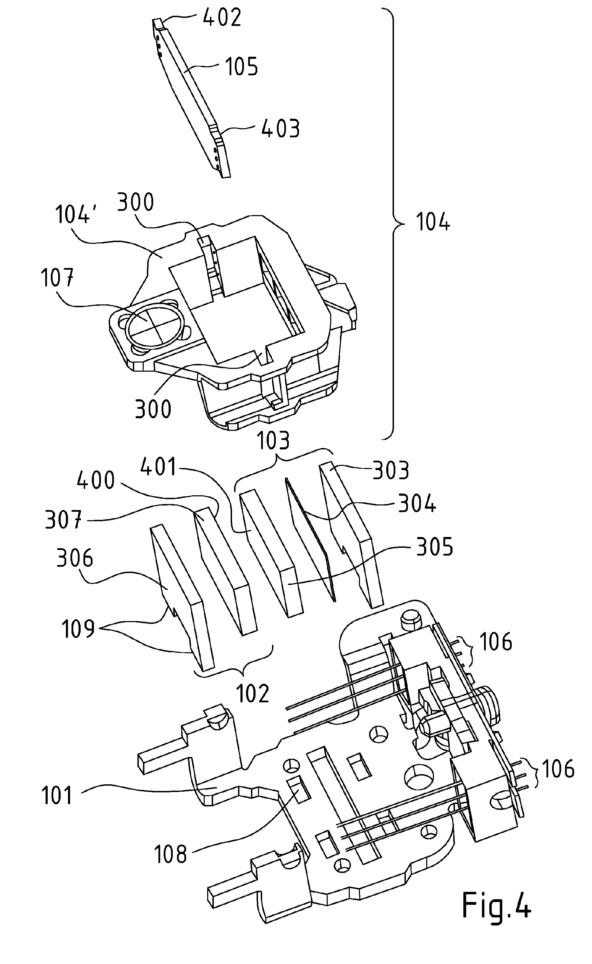

Fig. 4 shows an exploded view of the parts of the pickup of Fig. 1. The coil carrier 105 with its ends 402, 403 shown in the top section, together with the cage 104' carrying the lens 107 and having holder openings 300, form the movable part 104. In the section underneath, the elements of the magnet configurations 102, 103 are shown separated: the left magnet configuration 102 consists of the left yoke 306 and the left magnet 307 having a first planar surface 400 facing the coil carrier 105. The right magnet configuration 103 consists of the right yoke 303, the spacer sheet 304, and the right magnet 305 having a second planar surface 401 facing the other side of the coil carrier 105.

The bottom section of Fig. 4 shows the base 101 and the suspension wires 106. The base has yoke fastening openings 108 designed to receive protrusions 109 of the yokes 306, 303 for fastening.

With other words, the invention refers to a pickup 100 for moving storage media having a movable part 104 movable in a 2D plane of motion X, Y where smaller airgaps between magnets 307, 305 and coils on a flat carrier 105 are achieved by the movable part 104 having a holder opening 300 equipped to hold a part 402, 403 of the coil carrier 105 in a range of positions 301 which extend along an alignment direction 301 which lies outside the plane of motion X, Y, and in that the part 402, 403 of the coil carrier 105 is fixed within the holder opening 300 in one position 302 within the range 301; and to a manufacturing method thereof.

## Claims

1. A pickup (100) for accessing moving storage media having information tracks, the pickup having a base (101) carrying one or more magnet configurations (102, 103) with a planar magnet surface (400, 401) and having a movable part (104) carrying a planar coil carrier (105) with coils facing the magnet configurations (102, 103), the movable part (104) being movable in a plane of motion spanned by a distance direction (Y) and a tracking direction (X), and having a holder opening (300) equipped to hold a part (402, 403) of the coil carrier (105), the pickup **characterized in that** the holder opening (300) is equipped to hold the part (402, 403) of the coil carrier (405) in a range of positions (301) which extend along an alignment direction (301) which lies outside the plane of motion, and **in that** the part (402, 403) of the coil carrier (105) is fixed within the holder opening (300) in one position (302) within the range (301).

2. The pickup (100) of claim 1, wherein the alignment direction (301) is substantially orthogonal to the plane of motion (X, Y).

3. The pickup (100) of claim 1, wherein at least one (103) of the magnet configurations (102, 103) comprises a yoke (303) firmly connected to the base (101) and a magnet group (304, 305) mounted to the yoke (303).

4. The pickup (100) of claim 3, wherein the magnet group (304, 305) comprizes a magnetically conductive spacer sheet (304) mounted to the yoke (303) and a magnet (305) mounted to the spacer sheet (304).

5. A device for accessing moving storage media, the device **characterised in that** it has a pickup (100) according to any one of the previous claims.

6. A method for manufacturing the pickup (100) of claim 1, where the pickup (100) has a first magnet configuration (102) on one side of the coil carrier (105) having a first yoke (306) firmly connected to the base (101) and a first magnet (307), and has a second magnet configuration (103) on the other side of the coil carrier (105) having a second yoke (303) firmly connected to the base (101) and a second magnet group (304, 305), the method **characterized by** comprizing the following steps:
- fixing the first magnet (307) to the first yoke (306);
- moving the coil carrier (105) into a selected position (302) selected from the range of positions (301) within the holder opening (300) extending along the alignment direction (301) which lies outside the plane of motion such that the coil carrier (105) is at a predefined first distance (308) to the surface (400) of the first magnet (307);
- fixing the coil carrier (105) at the selected position (302);
- selecting a selected magnet group (304, 305) from a set of magnet groups of different thickness;
- fixing the selected magnet group (304, 305) to the second yoke (303).

7. The method of claim 6, wherein the magnet group (304, 305) comprizes a spacer sheet (304) and a second magnet (305), and wherein the step of selecting comprizes substeps of selecting a selected spacer sheet (304) from a set of spacer sheets of different thickness, and fixing the second magnet (305) to the selected spacer sheet (304).
